# EUROPEAN PATENT APPLICATION

(11) **EP 4 205 532 A1**
(43) Date of publication of application: **05.07.2023**
(21) Application number: 22213230.0
(22) Date of filing: 13.12.2022
(51) Int. Cl.: A01F 15/07, A01F 15/08

(54) **AGRICULTURAL BALER WITH REDUCED FRICTION BALE-CONTACTING SURFACES**

(30) Priority: 29.12.2021 US 202117564991
(71) Applicant: CNH Industrial Belgium NV, 8210 Zedelgem (BE)
(72) Inventor: REINHART, Christopher, Conestoga, 17516 (US); CHILDS, Albert, Meadville, 16335 (US)
(74) Representative: CNH Industrial IP Department

(57) **Abstract**

A bale-forming chamber (20) for an agricultural baler (10) includes: a compacter configured to form collected crop material into a bale (B); and a pair of sidewalls (14a, 14b) each defining a respective boundary of the bale-forming chamber (20). At least one of the sidewalls (14a, 14b) includes a dimpled surface (301, 401) having a plurality of dimples (302, 402) formed therein that each define a contactless region relative to the bale (B) being formed in the bale-forming chamber (20).

## Description

### BACKGROUND OF THE INVENTION

The present invention pertains to agricultural vehicles and, more specifically, to agricultural balers.

Agricultural harvesting machines, such as balers, are used to consolidate and package crop material so as to facilitate the storage and handling of the crop material for later use. In the case of hay, a mower-conditioner is typically used to cut and condition the crop material for windrow drying in the sun. In the case of straw, an agricultural combine discharges non-grain crop material from the rear of the combine defining the straw (such as wheat or oat straw) which is to be picked up by the baler. The cut crop material is typically raked and dried, and a baler, such as a large square baler or round baler, straddles the windrows and travels along the windrows to pick up the crop material and form it into bales.

A round baler may generally include a chassis, supported by wheels, a pickup unit to engage and lift the crop material into the baler, a cutting assembly, a main bale-forming chamber for forming a bale, and a wrapping mechanism for wrapping or tying a material around the bale after it has been formed in the main bale chamber. As the baler is towed over a windrow, the pickup unit lifts the crop material into the baler. Then, the crop material may be cut into smaller pieces by the cutting assembly. As the crop material enters the main bale-forming chamber, multiple carrier elements, e.g. rollers, chains and slats, and/or belts, will begin to roll a bale of hay within the chamber. These carrier elements are movable so that the chamber can initially contract and subsequently expand to maintain an appropriate amount of pressure on the periphery of the bale. After the bale is formed and wrapped by the wrapping mechanism, the rear of the baler is configured to open for allowing the bale to be discharged onto the field.

One constant concern with balers is fuel consumption. Even small amounts of inefficiency in the baler can lead to significant fuel costs over a harvest season and over the lifetime of the baler.

What is needed in the art is a way to improve the efficiency of balers.

### SUMMARY OF THE INVENTION

Exemplary embodiments provided according to the present disclosure include a pair of sidewalls each defining boundaries of a bale-forming chamber, with at least one of the sidewalls having a dimpled surface with dimples that each define a contactless region relative to the bale being formed in the bale-forming chamber.

In some exemplary embodiments provided in accordance with the present disclosure, a bale-forming chamber for an agricultural baler includes: a compacter configured to form collected crop material into a bale; and a pair of sidewalls each defining a respective boundary of the bale-forming chamber, at least one of the sidewalls including a dimpled surface having a plurality of dimples formed therein that each define a contactless region relative to the bale being formed in the bale-forming chamber.

In some exemplary embodiments provided in accordance with the present disclosure, an agricultural baler includes: a chassis; a pickup carried by the chassis and including a plurality of tines configured to pick up crop material; and a bale-forming chamber configured to receive picked up crop material from the pickup and form a bale from the picked up crop material. The bale-forming chamber includes: a compacter configured to form the picked up crop material into the bale; and a pair of sidewalls each defining a respective boundary of the bale-forming chamber, at least one of the sidewalls including a dimpled surface having a plurality of dimples formed therein that each define a contactless region relative to the bale being formed in the bale-forming chamber.

One possible advantage that may be realized by exemplary embodiments provided according to the present disclosure is that the dimples of the dimpled surface can reduce the surface area of the sidewall that contacts the bale during formation, reducing the friction and increasing the efficiency of the baler.

Another possible advantage that may be realized by exemplary embodiments provided according to the present disclosure is that the dimpled surface can be removed and replaced with a different dimpled surface.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 illustrates a perspective view of an exemplary embodiment of an agricultural baler including a bale-forming chamber, provided in accordance with the present disclosure;
FIG. 2 illustrates a perspective view of the agricultural baler of FIG. 1 while releasing a bale from the bale-forming chamber;
FIG. 3 illustrates an exemplary embodiment of a sidewall of the agricultural baler of FIGS. 1-2, the sidewall including a dimpled surface that is formed in the sidewall;
FIG. 4 illustrates a sidewall of an exemplary embodiment of a sidewall of the agricultural baler of FIGS. 1-2, the sidewall including a dimpled surface that is removably coupled to the sidewall; and
FIGS. 5A, 5B, 5C, 5D, 5E, 5F, 5G, 5H, 5I, and 5J illustrate cross-sections of exemplary embodiments of dimples that can be formed in the dimpled surface provided according to the present disclosure.

### DETAILED DESCRIPTION OF THE INVENTION

The terms "forward", "rearward", "left" and "right", when used in connection with the agricultural baler and/or components thereof are usually determined with reference to the direction of forward operative travel of the towing vehicle, but they should not be construed as limiting. The terms "longitudinal" and "transverse" are determined with reference to the fore-and-aft direction of the towing vehicle and are equally not to be construed as limiting.

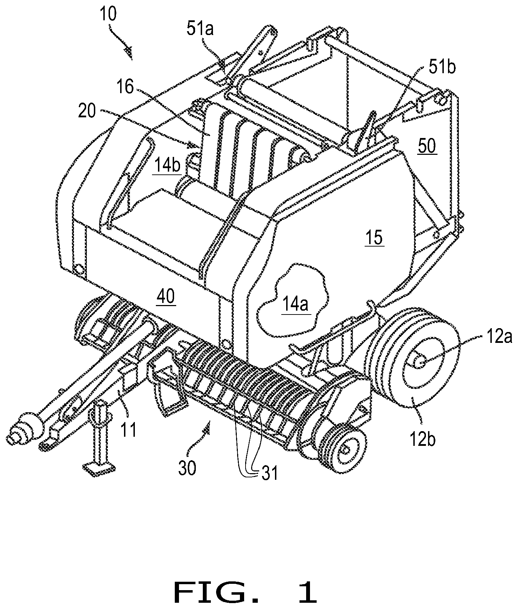

Referring now to the drawings, and more particularly to FIG. 1, an exemplary embodiment of an agricultural baler 10, illustrated in the form of a round baler, is shown to include a chassis terminating forwardly in a tongue 11 and rearward slightly beyond a transverse axle 12a to which a pair of wheels 12b (only one shown) is mounted, thus forming a wheel supported chassis. The chassis supports a series of belts 16 and floor rolls, which together with a first sidewall 14a (shown in the breakout) behind and generally parallel to cover panel 15 and a second sidewall 14b, collectively forming a bale-forming chamber 20. Cut crop material is picked up by a plurality of tines 31 of a transverse pickup 30 and conveyed through a harvesting assembly into the bale-forming chamber 20, which is configured to receive picked up crop material from the pickup 30, where it is formed into a cylindrically shaped bale by a compacter that is configured to form the bale and may include a series of conveyor belts 16. The bale is then optionally wrapped with twine or a net wrapping material dispensed from a wrapping mechanism generally behind shield 40. Upon completion of the optional wrapping process, the tailgate 50 pivots upwardly about pivot points 51a, 51b and the bale is discharged onto the ground. It should be appreciated that while the baler 10 is illustrated and described as a round baler, in some embodiments the baler 10 is configured as a square baler. In a square baler, the compacter may include, for example, a reciprocating plunger that compacts flakes of crop material into a bale rather than a series of belts.

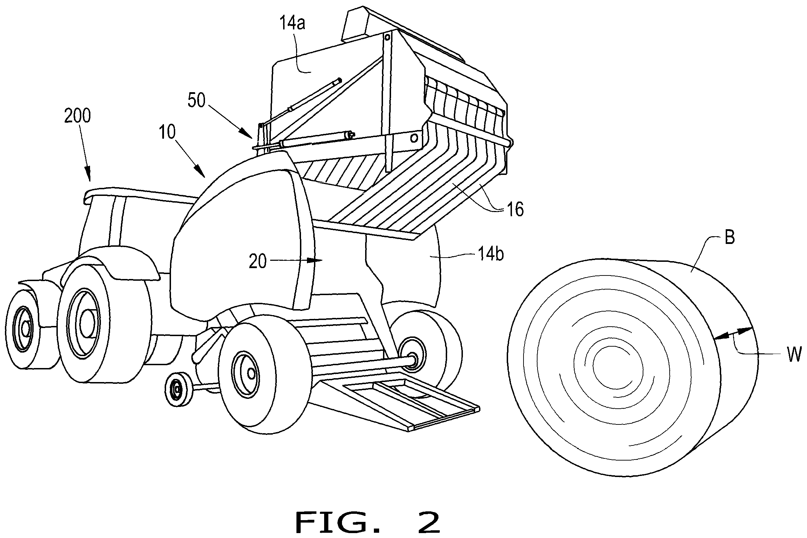

FIG. 2 illustrates the agricultural baler 10 coupled to a tractor 200 and releasing a bale B. The tailgate 50 is open so the bale B is released from the bale-forming chamber 20. As illustrated, one of the sidewalls, such as the first sidewall 14a, may be pivotably coupled to the chassis so the first sidewall 14a is pivotably movable with respect to the second sidewall 14b. It should be appreciated that, in some embodiments, both of the sidewalls 14a, 14b are fixed and are generally not movable with respect to each other. As can be further appreciated from FIG. 2, the sidewalls 14a, 14b each define a respective boundary of the bale-forming chamber 20, in this case lateral boundaries corresponding to a width W of the bale B, so the sidewalls 14a, 14b help control the width W of the bale B as the bale B forms in the bale-forming chamber 20.

It has been found that, during formation of a bale, the bale tends to rub against the sidewalls of the bale-forming chamber. The rubbing of the bale against the sidewalls lowers the efficiency of the bale-forming chamber due to friction, which makes it more difficult to move and compact the forming bale. The reduced efficiency can increase the amount of fuel needed to form bales.

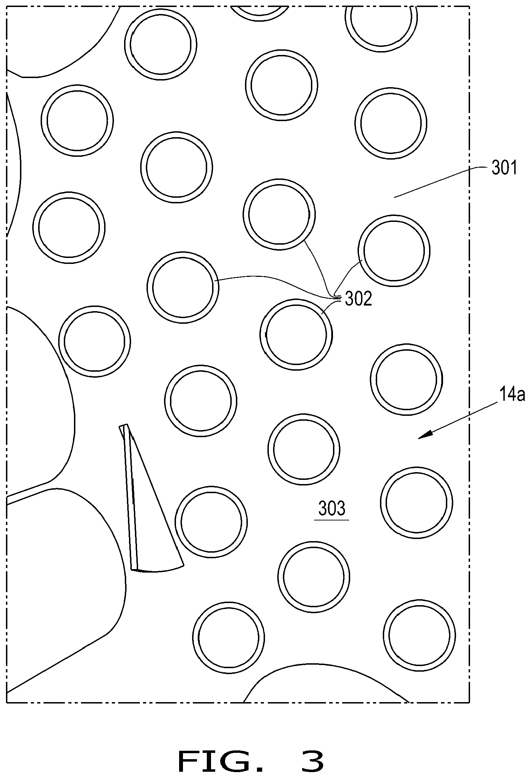

To address some of the previously described issues, and referring now to FIG. 3 as well, at least one of the sidewalls 14a, 14b, and in some embodiments both sidewalls 14a, 14b, includes a dimpled surface 301 that has a plurality of dimples 302 formed therein that each define a contactless region relative to the bale B being formed in the bale-forming chamber 20. As used herein, the "contactless region" is a portion of the dimples 302 that does not contact the bale B as the bale B is forming in the bale-forming chamber 20, which reduces the amount of surface area that the bale B is in contact with as the bale B is being formed by the compacter. By reducing the amount of surface area that the bale B is in contact with during formation, the frictional force exerted on the bale B during formation is reduced, which can reduce the amount of energy required to form the bale B. Thus, providing the dimpled surface 301 can increase the fuel efficiency of the baler 10 by reducing the friction between the bale B and adjacent surfaces during formation of the bale B.

In some embodiments, each of the sidewalls 14a, 14b has a respective dimpled surface 301 with dimples 302. By providing each of the sidewalls 14a, 14b with dimpled surfaces 301, the overall friction acting on the bale B can be further reduced during formation. One or both of the sidewalls 14a, 14b may include a sidewall surface 303 having the dimples 302 formed therein to form the dimpled surface 301, i.e., the dimples 302 are formed in one or both of the sidewalls 14a, 14b. Each of the dimpled surfaces 301 may have a similar amount of dimpling, i.e., amount of surface area of the dimpled surface 301 occupied by the dimples 302. Alternatively, in some embodiments, one of the dimpled surfaces 301 of one of the sidewalls 14a, 14b may have more dimpling than the dimpled surface 301 of the other sidewall 14a, 14b if, for example, the bale B tends to rub against one of the dimpled surfaces 301 more during formation. As illustrated, the dimples 302 may each have a hemispherical shape, but it should be appreciated that the shape of the dimples 302 may be adjusted to have other shapes, as will be described further herein. The dimples 302 may have diameters, for example, of between 0.75 inches and 4 inches, as will be described further herein. The depth of the dimples 302 may be adjusted in a variety of ways, as will be described further herein. The dimples 302 may be formed in the dimpled surface 301 by pressing a die into the dimpled surface 301, as is known, but the dimples 302 also may be formed in other ways. In some embodiments, the dimples 302 occupy at least 20% of a surface area of the dimpled surface 301 but it should be appreciated that the dimples 302 can occupy a greater proportion of the surface area such as at least 30%, at least 40%, at least 50%, or even 60% or more of the surface area of the dimpled surface 301.

The dimpled surface 301 with the dimples 302 may be formed from a variety of materials. When the dimpled surface 301 is part of one or both of the sidewalls 14a, 14b, the dimpled surface 301 may comprise the same material as the respective sidewall 14a, 14b. Exemplary materials include, but are not limited to, metals such as steel, stainless steel, or aluminum. The material of the dimpled surface 301 may be treated to further reduce friction between the bale B and the dimpled surface 301 during formation, especially the portions of the dimpled surface 301 that are not part of the dimples 302 and are likely to contact the bale B during formation. For example, the material of the dimpled surface 301 may be polished or coated to provide a smooth surface that lowers friction between the dimpled surface 301 and the bale B compared to an untreated surface. In some embodiments, the dimpled surface 301 is at least partially coated with a low-friction material that has a low coefficient of kinetic friction, e.g., less than 0.2, with the bale B during formation. Exemplary coating materials include, but are not limited, to fluoropolymers such as polytetrafluoroethylene (PTFE). It should thus be appreciated that the dimpled surface 301 can be provided in a variety of ways, other than simply including dimples 302, to reduce friction between the dimpled surface 301 and the bale B during formation.

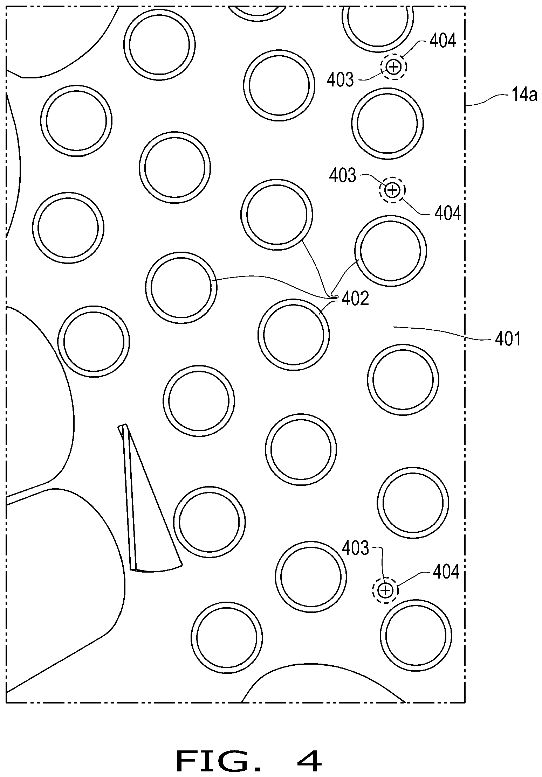

While the dimpled surface 301 is previously described as being formed in one or both of the sidewalls 14a, 14b, in some embodiments the dimpled surface is detachably coupled to one or both of the sidewalls 14a, 14b. Referring now to FIG. 4, such a dimpled surface 401 is illustrated that has dimples 402 and is detachably coupled to one of the sidewalls, illustrated as the first sidewall 14a. It should be appreciated that a similar dimpled surface may also be detachably coupled to the second sidewall 14b. The dimpled surface 401 may include one or more fasteners 403, such as screws and/or bolts, that detachably couple the dimpled surface 401 to the first sidewall 14a via a corresponding opening 404 formed in the first sidewall 14a. The fastener 403 may be tightened or loosened to respectively couple or uncouple the dimpled surface 401 to and from the first sidewall 14a. Providing the dimpled surface 401 as a detachable element, rather than forming dimples 302 in the sidewalls 14a, 14b, can allow the dimpled surface 401 to be easily replaced if the dimpled surface 401 becomes damaged. In all other respects, the dimpled surface 401 can be similar to the previously described dimpled surface 301.

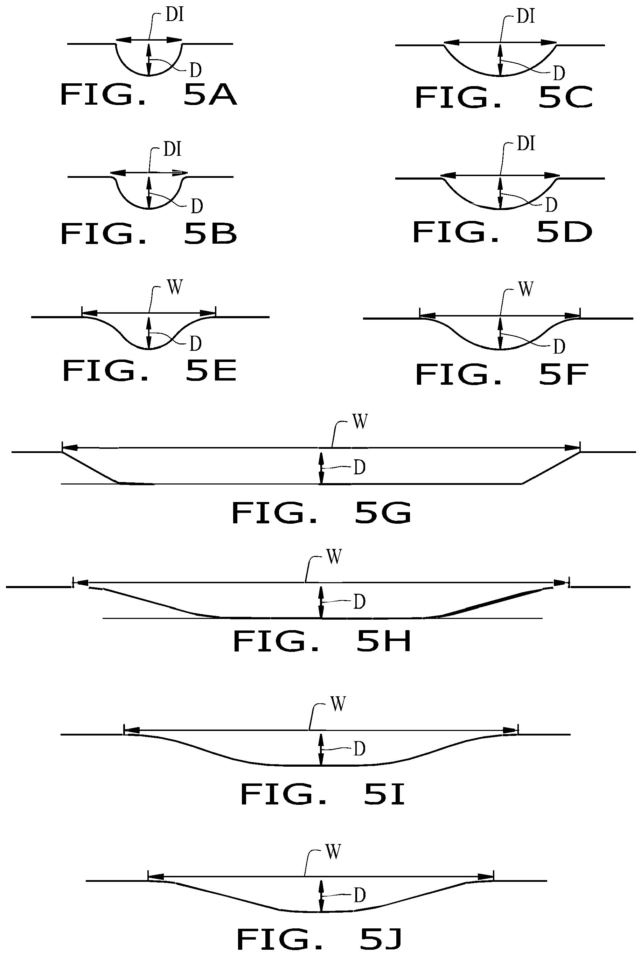

Referring now to FIGS. 5A-5J, cross-sections of exemplary embodiments of dimples that can be formed in the dimpled surface 301, 401 are illustrated. As can be appreciated from FIGS. 5A-5J, the relative dimensions and shapes of the dimples can be varied in many different ways. For example, as illustrated in FIGS. 5A and 5B, the dimples can be formed to have a cross-section that resembles a semi-circle (FIG. 5A) or close to a semi-circle (FIG. 5B), with a diameter DI and a depth D that are roughly the same. The dimples can also be formed to have a cross-section that is an arc of a circle, as illustrated in FIGS. 5C and 5D, with a diameter DI that is greater than a depth D of the dimples. The dimples can also be formed to have a cross-section that is curved but does not define an arc of a circle, as illustrated in FIGS. 5E and 5F, with a width W that is greater than a depth D of the dimples. The dimple cross-sections illustrated in FIGS. 5A-5F are all related in that each of the dimple shapes has a generally curved bottom, but the bottom of each dimple can also be flat or only slightly curved. As illustrated in FIG. 5G, for example, the dimples may be formed with linear sides that extend to a flat bottom, with a width W that is significantly greater than a depth D of the dimples. As illustrated in FIG. 5H, the dimples may be formed with curved sides that extend to a generally flat bottom, with a width W that is significantly greater than a depth D of the dimples. FIGS. 5I and 5J illustrate dimple cross-sections that are similar to the cross-section illustrated in FIG. 5H, with the cross-sections of FIGS. 5I and 5J being more curved than the cross-section illustrated in FIG. 5H but still having a width W that is significantly greater than a depth D of the dimples. While FIGS. 5A-5J illustrated that the dimples can be provided with many different cross-section shapes, it should be appreciated that the dimples can be formed in other ways so long as there is a smooth curve and/or transition between the dimples and the bale that the dimpled surface 301, 401 will contact during formation.

As illustrated in FIGS. 5A-5J, the shape of the dimples can be varied in many different ways. Similarly, the dimensions of each of the dimples can be varied in many different ways. For example, each of the dimples may have a depth D that is related to a thickness of the material in which the dimples are formed. When the dimples are formed in the dimpled surfaces 301, 401, for example, each dimple may have a depth D that is between one-fourth to double a thickness of the surface in which the dimples are formed. The depth D of the dimples may be, for example, between one-eighth inch and one-half inch, but it should be appreciated that the depth D may be less than or greater than these values.

From the foregoing, it should be appreciated that providing the bale-forming chamber 20 with one or more dimpled surfaces 301, 401 can reduce the friction between the bale B forming in the bale-forming chamber 20 and the sidewalls 14a, 14b and increase the fuel efficiency of the baler 10. The dimpled surface(s) 301, 401 can be conveniently retrofitted to current vehicles by, for example, forming dimples 302 in the sidewall(s) 14a, 14b and/or by coupling the dimpled surface 401 to the sidewall(s) 14a, 14b. Thus, providing one or both of the sidewalls 14a, 14b with the dimpled surface(s) 301, 401 represents a convenient and elegant way to increase efficiency of the baler 20.

These and other advantages of the present invention will be apparent to those skilled in the art from the foregoing specification. Accordingly, it is to be recognized by those skilled in the art that changes or modifications may be made to the above-described embodiments without departing from the broad inventive concepts of the invention.

## Claims

1. A bale-forming chamber (20) for an agricultural baler (10), comprising:
a compacter configured to form collected crop material into a bale (B); and
a pair of sidewalls (14a, 14b) each defining a respective boundary of the bale-forming chamber (20), wherein at least one of the sidewalls (14a, 14b) comprises a dimpled surface (301, 401) comprising a plurality of dimples (302, 402) formed therein that each define a contactless region relative to the bale (B) being formed in the bale-forming chamber (20).

2. The bale-forming chamber (20) of claim 1, wherein each of the sidewalls (14a, 14b) comprises a respective dimpled surface (301, 401).

3. The bale-forming chamber (20) of any one of the preceding claims, wherein the dimpled surface (401) is detachably coupled to the at least one sidewall (14a, 14b).

4. The bale-forming chamber (20) of any one of the preceding claims, wherein the at least one sidewall (14a, 14b) comprises a sidewall surface (303) having the dimples (302) formed therein to form the dimpled surface (301).

5. The bale-forming chamber (20) of any one of the preceding claims, wherein the dimples (302, 402) occupy at least 20% of a surface area of the dimpled surface (301, 401).

6. The bale-forming chamber (20) of any one of the preceding claims, wherein one of the sidewalls (14a, 14b) is movable with respect to the other sidewall (14b, 14a).

7. The bale-forming chamber (20) of any one of the preceding claims, wherein the dimples (302, 402) each have a hemispherical shape.

8. The bale-forming chamber (20) of any one of the preceding claims, wherein the dimpled surface (301, 401) is at least partially coated with a low-friction material.

9. An agricultural baler (10), comprising a chassis, a pickup (30) carried by the chassis and comprising a plurality of tines (31) configured to pick up crop material, and the bale-forming chamber (20) of any one of the preceding claims, the bale-forming chamber (20) being configured to receive picked up crop material from the pickup (30) and form a bale (B) from the picked up crop material.

10. The agricultural baler (10) of claim 9, wherein one of the sidewalls (14a, 14b) is pivotable with respect to the chassis so the sidewall (14a, 14b) can pivotably move with respect to the other sidewall (14b, 14a).
